(19) **Europäisches Patentamt**
**European Patent Office**
**Office européen des brevets**

(11) **EP 3 425 622 A2**

(12) **EUROPEAN PATENT APPLICATION**

(43) Date of publication:
09.01.2019 Bulletin 2019/02

(51) Int Cl.:
*G09G 3/34* (2006.01)   *G09G 3/36* (2006.01)

(21) Application number: 18173756.0

(22) Date of filing: 23.05.2018

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.06.2017 JP 2017117563**

(71) Applicant: **CANON KABUSHIKI KAISHA**
**Ohta-ku**
**Tokyo 146-8501 (JP)**

(72) Inventor: **TADA, Mitsuru**
**Ohta-ku, Tokyo 146-8501 (JP)**

(74) Representative: **TBK**
**Bavariaring 4-6**
**80336 München (DE)**

(54) **LIGHT-EMITTING APPARATUS, DISPLAY APPARATUS, AND INFORMATION-PROCESSING APPARATUS**

(57)   A light-emitting apparatus includes: a light source configured to emit light of a first color in response to input of a drive signal, and emit light of a second color after a predetermined time elapses following emission of the light of the first color; a setting unit configured to set a first detection period for detecting a brightness of the light of the first color within a period during which the drive signal is input into the light source, and set a second detection period for detecting a brightness of the light of the second color within a period during which the drive signal is not input into the light source; and a detecting unit configured to obtain a detection value corresponding to the brightness of the light emitted from the light source during each of the set first and second detection periods.

*FIG. 1*

**Description**

BACKGROUND OF THE INVENTION

Field of the Invention

The present invention relates to a light-emitting apparatus, a display apparatus, and an information-processing apparatus.

Description of the Related Art

In a liquid crystal display apparatus, unintended variation occurs in the emission color, emission brightness, and so on of a backlight unit due to variation in the temperature of the backlight unit, deterioration of the backlight unit, and so on. As a result of this unintended variation in the emission color, emission brightness, and so on of the backlight unit, unintended variation occurs in the display color, display brightness, and so on of the liquid crystal display apparatus.

Here, the backlight unit may include a white LED (an LED that emits white light) as a light source unit (a light source). A white LED is structured such that an LED chip and a fluorescent material are provided in an LED package. The LED chip emits excitation light (blue light or the like). The fluorescent material is provided on the LED chip so as to emit fluorescence (yellow light, red light, green light, or the like) when irradiated with the excitation light. Hence, the emission color of the white LED is determined by a combination of an emission characteristic of the LED chip and an emission characteristic of the fluorescent material. Variation in the emission characteristic due to variation in the temperature of the backlight unit, deterioration of the backlight unit, and so on typically differs between the LED chip and the fluorescent material. As a result, unintended variation in the emission color of the light source unit or the like occurs due to variation in the temperature of the backlight unit, deterioration of the backlight unit, and so on.

In a liquid crystal display apparatus, control may be executed to suppress the unintended variation described above. The backlight unit may include a large number of light source units (for example, several hundred LEDs). Further, to reduce the cost of the liquid crystal display apparatus, a small number (several tens, for example) of inexpensive brightness sensors are typically provided in the liquid crystal display apparatus as sensors used during the aforesaid control. In conventional control, the emission brightness of the light source unit is detected using the brightness sensor, and unintended variation in the display brightness is suppressed on the basis of a detection value of the emission brightness.

However, the brightness sensor cannot detect the emission color of the light source unit, and therefore, in the conventional control described above, unintended variation in the display color is not suppressed on the basis of the detection value of the emission brightness of the light source unit. To suppress unintended variation in the display color, a colorimeter capable of detecting the display color is used. However, using a colorimeter leads to a large increase in the cost of the control.

A high color-rendering white LED (a delayed luminescence type LED) may be used as the light source unit of the backlight unit in order to widen the color gamut of the emission color of the backlight unit, the display color of the liquid crystal display apparatus, and so on. In a delayed luminescence type LED, cyan light is emitted in response to supply of a drive signal (a current, a voltage, or the like) to the delayed luminescence type LED, whereupon red light (red fluorescence) is emitted at a delay. By time-integrating the cyan light and the red light, white light is realized as the emission color of the delayed luminescence type LED.

Japanese Patent Application Publication No. 2013-73803, for example, discloses a conventional technique relating to the detection of light emitted from a light source unit. In the technique disclosed in Japanese Patent Application Publication No. 2013-73803, a brightness sensor detects the brightness of light emitted from an LED at each of two predetermined timings within a period in which a drive current is applied to the light source unit. Then, on the basis of the two detection values obtained using the brightness sensor, feedback control is executed to keep the brightness of the light emitted from the LED constant.

SUMMARY OF THE INVENTION

However, when the technique disclosed in Japanese Patent Application Publication No. 2013-73803 is used on a backlight unit having a delayed luminescence type LED, a detection value of light other than white light may be obtained mistakenly from the brightness sensor as the detection value of the white light. For example, a detection value of the cyan light, which is detected during a period in which only the cyan light is emitted, may be obtained mistakenly as the detection value of the white light. Further, a detection value of the red light, which is detected during a period in which only the red light is emitted, may be obtained mistakenly as the detection value of the white light. Hence, a detection value of the light emitted from the delayed luminescence type LED cannot be obtained from the brightness sensor with a high degree of precision. Moreover, the emission color of the delayed luminescence type LED cannot be determined from the obtained detection value.

The present invention in its first aspect provides a light-emitting apparatus as specified in claims 1 to 12.

The present invention in its second aspect provides an information-processing apparatus as specified in claim 13.

The present invention in its third aspect provides a display apparatus as specified in claims 14 and 15.

The present invention in its fourth aspect provides a control method for a light-emitting apparatus as specified in claims 16 to 27.

The present invention in its fifth aspect provides a control method for a display apparatus as specified in claims 28 and 29.

The present invention in its sixth aspect provides a non-transitory computer readable medium as specified in claim 30.

Further features of the present invention will become apparent from the following description of exemplary embodiments with reference to the attached drawings.

BRIEF DESCRIPTION OF THE DRAWINGS

FIG. 1 is a view showing an example configuration of a light-emitting apparatus according to a first embodiment;
FIG. 2 is a view showing an example of an emission region according to the first embodiment;
FIG. 3 is a view showing an example of a method for setting a detection period according to the first embodiment;
FIG. 4 is a view showing an example of color relationship table data according to the first embodiment;
FIG. 5 is a view showing an example of a method for setting the detection period according to the first embodiment;
FIG. 6 is a view showing an example of a problem to be solved by a second embodiment;
FIG. 7 is a view showing an example of a method for setting a detection period according to the second embodiment;
FIG. 8 is a view showing an example configuration of a light-emitting apparatus according to a third embodiment;
FIG. 9 is a view showing an example of an emission region according to the third embodiment;
FIG. 10 is a view showing an example of a problem to be solved by the third embodiment;
FIG. 11 is a view showing an example of a method for setting an emission period and a detection period according to the third embodiment;
FIG. 12 is a view showing an example of a method for setting the emission period and the detection period according to the third embodiment; and
FIG. 13 is a view showing an example configuration of a display apparatus according to a fourth embodiment.

DESCRIPTION OF THE EMBODIMENTS

First Embodiment

A first embodiment of the present invention will be described below. An information-processing apparatus according to this embodiment is an apparatus for obtaining information relating to a light-emitting apparatus.

An example in which the light-emitting apparatus includes the information-processing apparatus will be described below. The light-emitting apparatus is a streetlamp, an indoor light, a microscope light, a flashlight, a household electric appliance, an in-vehicle apparatus, or the like, for example.

Note that the information-processing apparatus may be provided separately to the light-emitting apparatus. For example, the information-processing apparatus may be a personal computer (PC), a PDA, a tablet terminal, a mobile telephone terminal (including a smartphone), a household electric appliance, an in-vehicle apparatus, or the like provided separately to the light-emitting apparatus.

Configuration of Light-emitting Apparatus

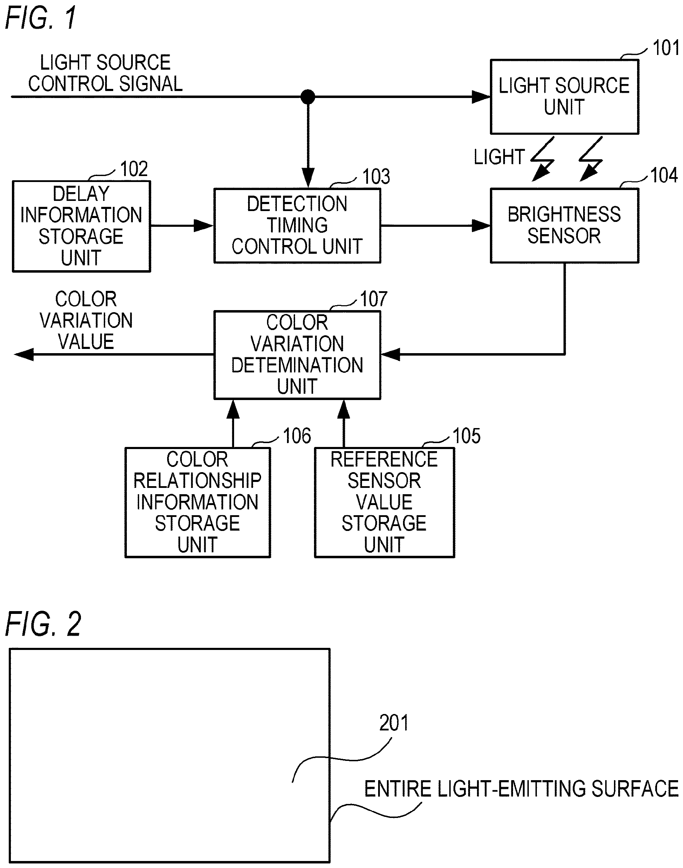

An example configuration of the light-emitting apparatus according to this embodiment will now be described. FIG. 1 shows an example configuration of the light-emitting apparatus according to this embodiment. The light-emitting apparatus according to this embodiment includes a light source unit (a light source) 101, a delay information storage unit 102, a detection timing control unit 103, a brightness sensor 104, a reference sensor value storage unit 105, a color relationship information storage unit 106, and a color variation determination unit 107.

A light source control signal is input into the light source unit 101. The light source unit 101 starts to emit a plurality of light beams corresponding respectively to a plurality of color components at a plurality of different timings in response to a lighting instruction included in the light source control signal. More specifically, the light source unit 101 starts to emit light corresponding to a first color at a first timing corresponding to the lighting instruction, and starts to emit light corresponding to a second color at a second timing following the elapse of a predetermined time after the first timing. In this embodiment, the first color and the second color correspond respectively to two color components constituting white. More specifically, the first color is cyan and the second color is red.

In this embodiment, the light source unit 101 is constituted by a single light-emitting element such as a high color-rendering white LED (a delayed luminescence type LED). A delayed luminescence type LED is structured such that an LED chip and a fluorescent material are provided in an LED package. The LED chip emits excitation light (cyan light, blue light, or the like). The fluorescent material is provided on the LED chip so as to emit fluorescence (yellow light, red light, green light, or the like) when irradiated with the excitation light. Hence, the emission color of the delayed luminescence type LED is determined by a combination of an emission characteristic of the LED chip and an emission characteristic of the fluorescent material. In the delayed luminescence type LED according to this embodiment, cyan light is emitted in response to supply of a drive signal (a current, a voltage, or the like) to the delayed luminescence type LED, whereupon red light (red fluorescence) is emitted at a delay. More specifically, the LED chip emits cyan light as the excitation light, and the fluorescent material emits red light as the fluorescence. By time-integrating the cyan light and the red light, white light is realized as the emission color of the delayed luminescence type LED. Further, a certain amount of time is required for the fluorescent material to emit red light after the cyan light emitted by the LED enters the fluorescent material. The reason for this is believed to be that a fluorescent material emits light after first absorbing energy exerted thereon so as to trap electrons or holes.

In this embodiment, a time difference between the timing at which cyan light emission (emission of the cyan light) starts and the timing at which red light emission (emission of the red light) starts is set as a delay time. The delay time is determined according to characteristics of the fluorescent material of the delayed luminescence type LED. Further, the light source control signal is a pulse width modulation signal for controlling the timing at which the LED is lit. Cyan light is emitted from the LED for a lighting period specified by the light source control signal. By controlling the light source control signal, light emission by the light source unit 101 can be controlled.

FIG. 2 shows an example of an emission region 201 corresponding to the light source unit 101. The emission region 201 is a region covering an entire emission surface of the light-emitting apparatus. Therefore, by controlling light emission by the light source unit 101, the light emitted from the emission surface can be controlled over the entire emission surface.

Note that the first color is not limited to cyan and the second color is not limited to red. The plurality of emitted light beams are not limited to two light beams corresponding respectively to two color components, and three or more light beams corresponding respectively to three or more color components may be emitted. The light source unit 101 may include a plurality of light-emitting elements. The light-emitting element is not limited to a delayed luminescence type LED having an LED (a light-emitting diode) and a fluorescent material. For example, an organic electro-luminescence (EL) element, a laser light source, a cold cathode ray tube, or the like may be used as the light-emitting element instead of an LED. The light-emitting apparatus may include a plurality of light source units.

The delay information storage unit 102 stores delay information in advance. The delay information is information relating to the delay time of each of the plurality of emitted light beams. The delay time is a time following the emission start timing of the light beam, among the plurality of emitted light beams, that is emitted earliest, a time following the timing of the lighting instruction, or the like, for example. In this embodiment, the delay information denotes a time extending from the timing at which cyan light emission (emission of the cyan light) is started to the timing at which red light emission (emission of the red light) is started as the delay time. In other words, the delay information denotes the aforesaid predetermined time. A semiconductor memory, a magnetic disc, an optical disc, or the like, for example, is used as the delay information storage unit 102. Note that the delay information storage unit 102 may be a storage apparatus that can be attached to and detached from the light-emitting apparatus.

There are no particular limitations on the format of the delay information, but in this embodiment, the delay information storage unit 102 stores delay table data as table data including the delay information. The delay time of the light source unit 101 is assumed to be 10 msec, for example.

The detection timing control unit 103 sets a period in which only light of a target component, among the plurality of color components (cyan and red), is emitted from the light source unit 101 as a detection period. In this embodiment, the detection timing control unit 103 reads the delay information from the delay information storage unit 102. Further, the light source control signal is input into the detection timing control unit 103. The detection timing control unit 103 then sets the detection period on the basis of the delay information and the light source control signal. More specifically, the detection timing control unit 103 generates a sensor detection control signal so that the brightness sensor 104 implements detection during the period in which only light of the target component is emitted from the light source unit 101, and outputs the sensor detection control signal to the brightness sensor 104. In other words, the detection timing control unit 103 sets a cyan light detection period within a period in which only cyan light is emitted. Further, the detection timing control unit 103 sets a red light detection period within a period in which only red light is emitted. The sensor detection control signal is generated on the basis of the delay information and the light source control signal.

Note that as long as a detection value (a sensor value) corresponding to a brightness detected by the brightness sensor 104 during the detection period is obtained by the color variation determination unit 107, the brightness sensor 104 may also implement detection outside the detection period.

The brightness sensor 104 detects the brightness of the light emitted from the light source unit 101, and outputs a sensor value corresponding to the detected brightness to the color variation determination unit 107. In this embodiment, the sensor detection control signal is input into the brightness sensor 104. The brightness sensor 104 then executes the processing described above in accordance with the sensor detection control signal. In other words, the brightness sensor 104 detects the brightness of the light emitted from the light source unit 101 during the detection period, and outputs a sensor value corresponding to the detected brightness to the color variation determination unit 107.

The reference sensor value storage unit 105 stores a reference sensor value (a reference value of the sensor value) in advance. The reference sensor value is a fixed value determined in advance by a manufacturer, a value that is periodically updated automatically in the light-emitting apparatus, a value specified by a user, or the like, for example. More specifically, the reference sensor value is a sensor value or the like obtained when the emission color of the light source unit 101 is white. A semiconductor memory, a magnetic disc, an optical disc, or the like, for example, is used as the reference sensor value storage unit 105. Note that the reference sensor value storage unit 105 may be a storage apparatus that can be attached to and detached from the light-emitting apparatus. The emission color may also be referred to as "a color perceived by a user when the user sees the light emitted from the light source unit 101", "a color of output light realized by time-integrating the plurality of light beams corresponding respectively to the plurality of color components", and so on.

The color relationship information storage unit 106 stores color relationship information in advance. The color relationship information denotes a correspondence relationship between the sensor value and a color-related value relating to the emission color of the light source unit 101. The color relationship information is information generated using a colorimeter or the like, fixed information set in advance by the manufacturer, information that is periodically updated automatically in the light-emitting apparatus, information specified by the user, or the like, for example. A semiconductor memory, a magnetic disc, an optical disc, or the like, for example, is used as the color relationship information storage unit 106. Note that the color relationship information storage unit 106 may be a storage apparatus that can be attached to and detached from the light-emitting apparatus.

The color variation determination unit 107 obtains the sensor value corresponding to the brightness detected by the brightness sensor 104 during the detection period from the brightness sensor 104 as a sensor value corresponding to the target component. Here, a case in which a plurality of detection periods corresponding respectively to a plurality of target components are set will be considered. In this case, the color variation determination unit 107 obtains a sensor value corresponding to the brightness detected by the brightness sensor 104 during the detection period corresponding to the target component from the brightness sensor 104 as the sensor value corresponding to the target component for each of the plurality of target components. For example, a sensor value corresponding to the brightness detected by the brightness sensor 104 during the detection period corresponding to cyan is obtained from the brightness sensor 104 as the sensor value corresponding to cyan. Further, a sensor value corresponding to the brightness detected by the brightness sensor 104 during the detection period corresponding to red is obtained from the brightness sensor 104 as the sensor value corresponding to red.

Furthermore, in this embodiment, the color variation determination unit 107 determines a value (emission color information) relating to the emission color of the light source unit 101 on the basis of the obtained sensor value (a current sensor value). More specifically, the color variation determination unit 107 determines an emission color value indicating the emission color (the current emission color) of the light source unit 101 on the basis of the current sensor value and the color relationship information. The color variation determination unit 107 then determines a color variation value indicating a difference between the emission color (the current emission color) of the light source unit 101 and a predetermined emission color on the basis of the emission color value, the reference sensor value, and the color relationship information.

Note that either the emission color value or the color variation value alone may be determined as the value relating to the emission color of the light source unit 101. Further, a different value from the emission color value and the color variation value may be determined as the value relating to the emission color of the light source unit 101. The color variation determination unit 107 may output the obtained sensor value to another apparatus in association with the corresponding color component. The value relating to the emission color of the light source unit 101 may then be determined by the other apparatus.

Detection Period Setting Method

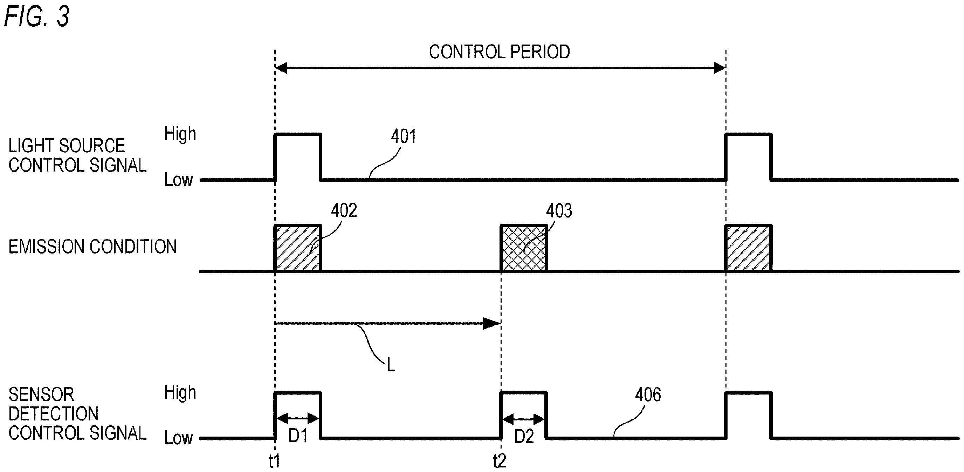

A specific example of a method for setting the detection period will now be described using FIG. 3. Here, an example in which the light source unit 101 emits cyan light and red light once each during each of a plurality of control periods will be described. When the light-emitting apparatus is a display apparatus (a fourth embodiment), a single control period corresponds to a period (a vertical synchronization period) of a single frame.

The detection timing control unit 103 obtains the delay information and the light source control signal. In FIG. 3, a reference numeral 401 denotes the light source control signal. In this embodiment, as shown in FIG. 3, the light source control signal 401 switches from "Low" to "High" at a start timing of the control period. The light source control signal 401 then switches from "High" to "Low". The light source unit 101 executes cyan light emission 402 during the period in which the light source control signal 401 = "High". In other words, the light source control signal 401 denotes the period in which the light source unit 101 emits cyan light. Red light emission 403 starts at a timing t2 delayed by a delay time V following a start timing t1 of cyan light emission 402. The length of the period of red light emission 403 is set to be substantially identical (where "substantially" includes "completely") to the length of the period of cyan light emission 402. Note that the length of the period of red light emission 403 is determined according to the characteristics of the fluorescent material, and may be shorter or longer than the length of the period of cyan light emission 402, but here, the length of the period of red light emission 403 is set to correspond to the length of the period of cyan light emission 402. It is assumed here that in the single light source unit 101, the period of cyan light emission 402 and the period of red light emission 403 are completely separated. In other words, red light is emitted during a period in which the light source control signal 401 is not "High". The detection timing control unit 103 can ascertain the period of cyan light emission 402, the period of red light emission 403, and so on from the light source control signal 401 and the delay information (the delay time V). Note that the start timing t1 of cyan light emission may be later than the start timing of the control period, the timing at which the light source control signal 401 switches from "Low" to "High", and so on.

The detection timing control unit 103 then generates the sensor detection control signal on the basis of the delay information and the light source control signal. A reference numeral 406 in FIG. 3 denotes the sensor detection control signal. A period in which the sensor detection control signal = "High" serves as the detection period.

The sensor detection control signal 406 in FIG. 3 is a signal employed in a case where a detection period corresponding to cyan (a cyan light detection period) and a detection period corresponding to red (a red light detection period) are set. In the sensor detection control signal 406, a detection period D1 is set in the period of cyan light emission 402, and a detection period D2 is set in the period of red light emission 403. The detection period D1 is set to be included in the period during which only cyan light is emitted from the light source unit 101. The detection period D1 is set to be included in the period during which the light source control signal 401 is "High". More specifically, a period following the start timing t1 of cyan light emission 402 is set as the detection period D1 corresponding to cyan. During the detection period D1, only cyan light is emitted from the light source unit 101, and therefore the detection value detected by the brightness sensor 104 during the detection period D1 corresponds to the brightness of the cyan light emitted from the light source unit 101. The detection period D2 is set to be included in the period during which red light is emitted. The detection period D2 is a period delayed by the delay time V from the period in which the light source control signal 401 is maintained at "High", and is set to be included in the period during which the light source control signal 401 is "Low". More specifically, a period following the start timing t2 of red light emission 403 is set as the detection period D2 corresponding to red. During the detection period D2, only red light is emitted from the light source unit 101, and therefore the detection value detected by the brightness sensor 104 during the detection period D2 corresponds to the brightness of the red light emitted from the light source unit 101.

Color Variation Value Determination Method

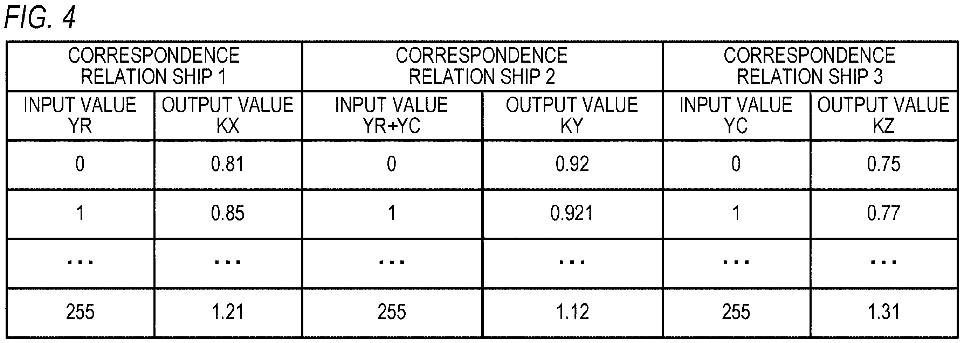

A specific example of a method for determining the color variation value will now be described using FIG. 4. Here, an example of a case in which the sensor detection control signal 406 of FIG. 3 has been generated will be described. FIG. 4 is a view showing an example of color relationship table data serving as the color relationship information. The color relationship table data show an X stimulus value, a Y stimulus value, and a Z stimulus value, which together constitute XYZ tristimulus values, as color-related values. More specifically, the color relationship table data show the following three correspondence relationships. In the three correspondence relationships shown below, a sensor value YR denotes the sensor value of the red light detected by the brightness sensor 104 during the detection period D2, and a sensor value YC denotes the sensor value of the cyan light detected by the brightness sensor 104 during the detection period D1.

- A correspondence relationship between the sensor value YR and an X stimulus value KX
- A correspondence relationship between a sum of the sensor value YR and the sensor value YC, and a Y stimulus value KY
- A correspondence relationship between the sensor value YC and the Z stimulus value KZ

Step 1-1

In step 1-1, the color variation determination unit 107 obtains the sensor value YC detected by the brightness sensor 104 during the detection period D1 from the brightness sensor 104. The sensor value YC corresponds to the brightness of the cyan light. Further, the color variation determination unit 107 obtains the sensor value YR detected by the brightness sensor 104 during the detection period D2 from the brightness sensor 104. The sensor value YR corresponds to the brightness of the red light. The color variation determination unit 107 then determines the XYZ tristimulus values (the X stimulus value, the Y stimulus value, and the Z stimulus value) = (KX, KY, KZ) as an emission color value indicating the emission color (the current emission color) of the light source unit 101 on the basis of the sensor values YR, YC and the color relationship table data. More specifically, the color variation determination unit 107 obtains the X stimulus value KX corresponding to the detected sensor value YR from the color relationship table data. The color variation determination unit 107 then obtains the Y stimulus value KY corresponding to the sum of the detected sensor value YR and the detected sensor value YC from the color relationship table data. The color variation determination unit 107 then obtains the Z stimulus value KZ corresponding to the detected sensor value YC from the color relationship table data.

Note that the color-related values corresponding to the obtained sensor values YR, YC may not be shown in the color relationship table data. In this case, the color-related values corresponding to the obtained sensor values may be determined by, for example, interpolation processing using the plurality of color-related values shown in the color relationship table data.

Step 1-2

In step 1-2, the color variation determination unit 107 obtains information indicating the reference emission color. The information indicating the reference emission color is constituted by XYZ tristimulus values (CX, CY, CZ) denoting the reference emission color (the predetermined emission color). Note that the color variation determination unit 107 may obtain the information indicating the reference emission color on the basis of reference sensor values CR, CC obtained from the reference sensor value storage unit 105 and the color relationship table data. The reference sensor value CR is a reference value of the sensor value of the red light, and the reference sensor value CC is a reference value of the sensor value of the cyan light.

Step 1-3

In step 1-3, the color variation determination unit 107 determines a color variation value indicating a difference between the emission color (the current emission color) of the light source unit 101 and the reference emission color on the basis of the XYZ tristimulus values (KX, KY, KZ), (CX, CY, CZ) obtained in steps 1-1 and 1-2. In this embodiment, the color variation determination unit 107 determines an X variation value DX indicating a difference between the X stimulus value KX and the X stimulus value CX, a Y variation value DY indicating a difference between the Y stimulus value KY and the Y stimulus value CY, and a Z variation value DZ indicating a difference between the Z stimulus value KZ and the Z stimulus value CZ. More specifically, as shown below in formula 1, the color variation determination unit 107 calculates the X variation value DX by dividing the X stimulus value KX by the X stimulus value CX. Further, as shown below in formula 2, the color variation determination unit 107 calculates the Y variation value DY by dividing the Y stimulus value KY by the Y stimulus value CY. Further, as shown below in formula 3, the color variation determination unit 107 calculates the Z variation value DZ by dividing the Z stimulus value KZ by the Z stimulus value CZ.

$$DX = KX/CX \ ... \ (formula \ 1)$$

$$DY = KY/CY \ ... \ (formula \ 2)$$

$$DZ = KZ/CZ \ ... \ (formula \ 3)$$

Modified Example 1

In this embodiment, an example in which values based on XYZ tristimulus values are determined as values (the emission color value, the color variation value, and so on) relating to the emission color of the light source unit 101

**EP 3 425 622 A2**

was described, but the present invention is not limited thereto. For example, values based on u' and v' chromaticity values (a u' chromaticity value and a v' chromaticity value) may be determined as values relating to the emission color of the light source unit 101. By employing a u' chromaticity value and a v' chromaticity value respectively as color-related values, values based on the u' and v' chromaticity values (u' and v' chromaticity coordinates) can be determined as values relating to the emission color of the light source unit 101. Values based on x and y chromaticity values (an x chromaticity value and a y chromaticity value) can also be determined as values relating to the emission color of the light source unit 101. By employing an x chromaticity value and a y chromaticity value respectively as color-related values, values based on the x and y chromaticity values (x and y chromaticity coordinates) can be determined as values relating to the emission color of the light source unit 101. Moreover, a value based on at least one of an X stimulus value, a Y stimulus value, a Z stimulus value, a u' chromaticity value, a v' chromaticity value, an x chromaticity value, and a y chromaticity value may be determined as a value relating to the emission color of the light source unit 101.

Further, in this embodiment, an example in which table data (color relationship table data) are used as the color relationship information was described, but the present invention is not limited thereto. For example, a function or the like indicating a correspondence relationship between the sensor value and the color-related value may be used as the color relationship information.

Furthermore, typically, the X stimulus value of light has a high correlation with the red component of the light, the Y stimulus value of light has a high correlation with the sum of the red component and the cyan component of the light, and the Z stimulus value of light has a high correlation with the cyan component of the light. In this embodiment, therefore, an example in which the sensor value R is associated with the X stimulus value, the sum of the sensor value R and the sensor value C is associated with the Y stimulus value, and the sensor value C is associated with the Z stimulus value was described. However, the correspondence relationship between the sensor value and the color-related value is not limited to this example, and instead, for example, the correspondence relationship between the sensor value and the color-related value may be determined on the basis of the sensor value and a measurement value of the emission color of the light source unit 101. Further, the sensor value R may be associated with the X stimulus value, and the sensor value C may be associated with the Y stimulus value and the Z stimulus value.

Furthermore, in this embodiment, an example in which the value relating to the emission color of the light source unit 101 is determined on the basis of the sensor value obtained from the brightness sensor 104 was described, but the present invention is not limited thereto, and instead, for example, an emission brightness or the like of the light source unit 101 may be determined on the basis of the sensor value of the cyan light and the sensor value of the red light. The emission brightness may also be referred to as "a brightness perceived by a user when the user sees the light emitted by the light source unit 101", "a brightness of output light realized by time-integrating the plurality of light beams corresponding respectively to the plurality of color components", and so on.

Moreover, in this embodiment, an example in which a cyan light detection period and a red light detection period are set was described, but the present invention is not limited thereto, and instead, for example, a cyan light detection period may be set alone. By setting the cyan light detection period, the sensor value YC can be obtained as the sensor value of the cyan light, and as a result, the Z stimulus value KZ, the Z variation value DZ, and so on can be determined. Further, a red light detection period may be set alone. By setting the red light detection period, the sensor value YR can be obtained as the sensor value of the red light, and as a result, the X stimulus value KX, the X variation value DX, and so on can be determined.

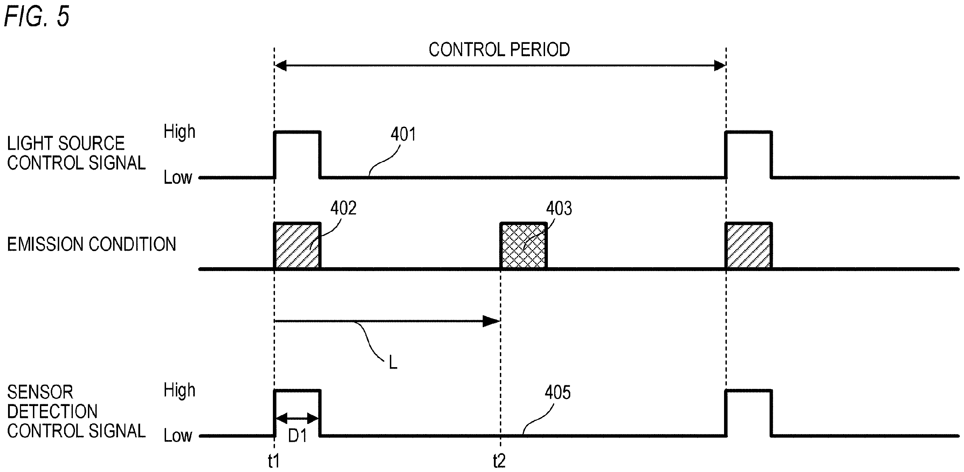

Another specific example of a method for setting the detection period will now be described using FIG. 5. A reference numeral 405 in FIG. 5 denotes the sensor detection control signal. The sensor detection control signal 405 shown in FIG. 5 is a signal employed when only a detection period corresponding to cyan is set. In the sensor detection control signal 405, the detection period D2 of FIG. 3 is not set, but the detection period D1 is set within the period of cyan light emission 402. As described above using FIG. 3, the detection value detected by the brightness sensor 104 during the detection period D1 corresponds to the brightness of the cyan light emitted from the light source unit 101.

Effects

According to this embodiment, as described above, a period in which only light of a target component is emitted from the light source unit is set as a detection period. A sensor value corresponding to the brightness detected by the brightness sensor during the detection period is then obtained from the brightness sensor as a sensor value corresponding to the target component. Hence, a sensor value of the light emitted from the light source unit can be obtained with a high degree of precision. More specifically, a sensor value can be obtained after recognizing the color component of the light corresponding to the sensor value. As a result, high-precision processing based on the obtained sensor value can be executed. More specifically, values relating to the emission color and emission brightness of the light source unit can be determined with a high degree of precision.

8

Second Embodiment

A second embodiment of the present invention will now be described. In the first embodiment (FIGS. 3 and 5), an example in which the cyan light emission period and the red light emission period are completely separated was described. In this embodiment, an example in which part of the red light emission period overlaps part of the cyan light emission period will be described. Part of the red light emission period overlaps part of the cyan light emission period when, for example, the emission brightness of the light source unit is high or the like. Note that points (configurations, processing, and so on) differing from the first embodiment will be described in detail below, while description of points that are identical to the first embodiment will be omitted.

Detection Period Setting Method

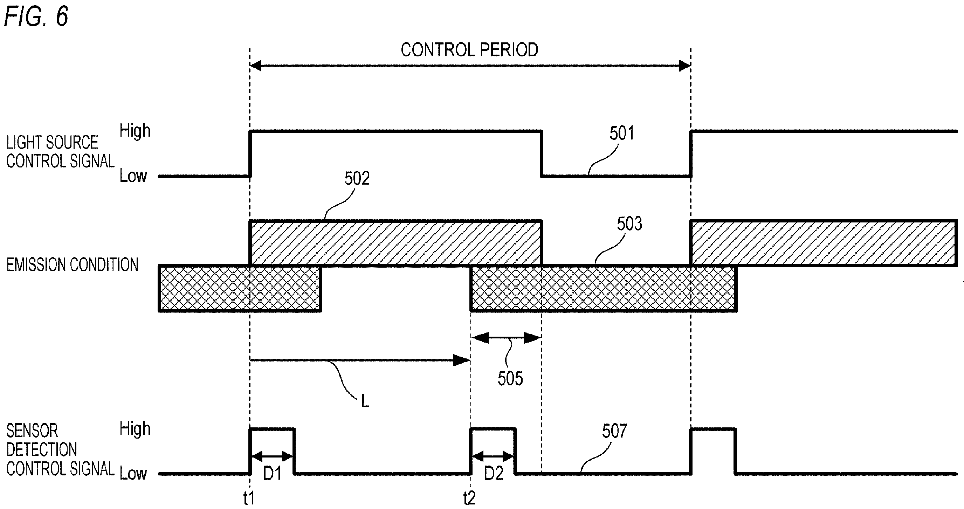

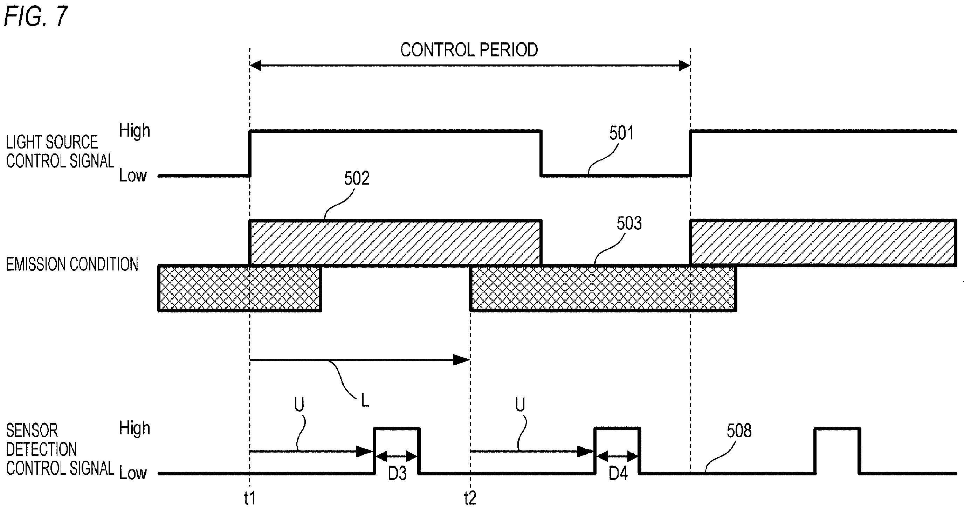

A specific example of a method for setting the detection period will now be described using FIGS. 6 and 7. Here, an example in which the light source unit 101 emits cyan light and red light once each during each of a plurality of control periods will be described. Further, here, an example in which both a cyan light detection period and a red light detection period are set will be described.
The detection timing control unit 103 obtains the delay information and the light source control signal. In FIGS. 6 and 7, a reference numeral 501 denotes the light source control signal. The light source unit 101 executes cyan light emission 502 during a period in which the light source control signal 501 = "High", and starts red light emission 503 at the timing t2 delayed by the delay time V following the start timing t1 of cyan light emission 502. Part of the period of cyan light emission 502 overlaps part of the period of red light emission 503. For example, during a period 505, both cyan light emission 502 and red light emission 503 are executed.
The detection timing control unit 103 generates the sensor detection control signal on the basis of the delay information and the light source control signal. A reference numeral 507 in FIG. 6 and a reference numeral 508 in FIG. 7 respectively denote the sensor detection control signal.
The sensor detection control signal 507 in FIG. 6 is equal to that of the first embodiment (the sensor detection control signal 406 in FIG. 3). Accordingly, the detection periods D1, D2 are set therein. As shown in FIG. 6, in the sensor detection control signal 507, the detection periods D1, D2 are set respectively within periods in which both cyan light emission 502 and red light emission 503 are executed. During the detection periods D1, D2, therefore, the brightness sensor 104 cannot detect the brightness of only the cyan light emitted from the light source unit 101, the brightness of only the red light emitted from the light source unit 101, and so on.
Hence, in this embodiment, the detection timing control unit 103 sets the sensor detection control signal 508 shown in FIG. 7 on the basis of the delay information and the light source control signal. In the sensor detection control signal 508, detection periods D3, D4 are set. A phase of the detection periods D3, D4 deviates from a phase of the detection periods D1, D2 in FIG. 6 by a time U. As a result, the detection period (the cyan light detection period) D3 is set within the period during which only cyan light emission 502 is executed, and the detection period (the red light detection period) D4 is set within the period during which only red light emission 503 is executed.
More specifically, the detection timing control unit 103 calculates the time U corresponding to the phase using formulae 4 and 5 shown below, and generates the sensor detection control signal in accordance with the time U. In formulae 4 and 5, "T" denotes the length of the period in which the light source control signal 501 = "High", the length of the period of cyan light emission 502, the length of the period of red light emission 503, and so on. "S" denotes the length of the detection period. "J" denotes the length of the control period.

$$\text{When } T > V \text{ and } (T + S) < J, U = \text{at least } (V + T - J) \text{ and not more than } (V - S) \text{ ... (formula 4)}$$

$$\text{When } T \leq V, U = 0 \text{ ... (formula 5)}$$

Effects

According to this embodiment, as described above, a period in which only light of the target component is emitted from the light source unit can be set more reliably as the detection period. As a result, the effects described in the first embodiment can be obtained more reliably.

Third Embodiment

A third embodiment of the present invention will now be described. In the first and second embodiments, examples in which the light-emitting apparatus includes a single light source unit were described. In this embodiment, an example in which the light-emitting apparatus includes a plurality of light source units will be described. Note that points (configurations, processing, and so on) differing from the first embodiment will be described in detail below, while description of points that are identical to the first embodiment will be omitted.

Configuration of Light-emitting Apparatus

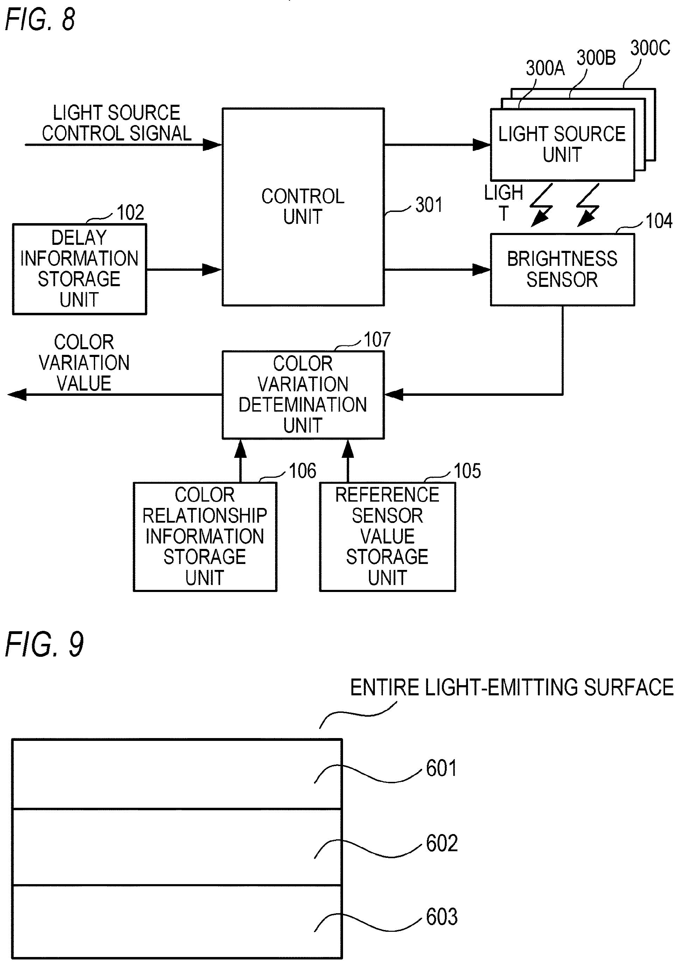

An example configuration of the light-emitting apparatus according to this embodiment will now be described. FIG. 8 shows an example configuration of the light-emitting apparatus according to this embodiment. The light-emitting apparatus according to this embodiment includes three light source units 300A to 300C in place of the light source unit 101 according to the first embodiment (FIG. 1). Each of the three light source units 300A to 300C has similar functions to the light source unit 101. Further, the light-emitting apparatus according to this embodiment includes a control unit 301 in place of the detection timing control unit 103 according to the first embodiment. Note that the number of light source units may be greater or smaller than three.

FIG. 9 shows an example of three emission regions 601 to 603 corresponding respectively to the three light source units 300A to 300C. In this embodiment, the three light source units 300A to 300C are arranged in a vertical direction. The emission region 601, which occupies an upper third of the emission surface, is associated with the light source unit 300A. The emission region 602, which occupies a middle third of the emission surface, is associated with the light source unit 300B. The emission region 603, which occupies a lower third of the emission surface, is associated with the light source unit 300C.

The periods of the plurality of light emission operations (cyan light emission and red light emission) are determined in accordance with the light source control signal (the lighting instruction). It may therefore be impossible to create a period in which a detection period can be set from the light source control signal. A period in which a detection period can be set is a period in which the brightness sensor 104 can detect a desired brightness (the brightness of light of a target component, emitted from a single light source unit) with a high degree of precision.

In the first and second embodiments, the single light source unit 101 is used. Hence, when the brightness sensor 104 detects the brightness of the light emitted from the light source unit 101, light emitted from another light source unit does not leak into the brightness sensor 104. In the first and second embodiments, therefore, the period in which a detection period can be set corresponds to the period in which only light of the target component is emitted from the light source unit 101, or the like.

In this embodiment, on the other hand, the three light source units 300A to 300C are used. Hence, when the brightness sensor 104 detects the brightness of light emitted from a target light source unit among the light source units 300A to 300C, light emitted from a light source unit on the periphery of the target light source unit may leak into the brightness sensor 104. This light leakage leads to a reduction in the detection precision of the brightness sensor 104. In this embodiment, therefore, the period in which a detection period can be set corresponds to a period in which only light of the target component is emitted from the target light source unit and the light source units on the periphery of the target light source unit are extinguished, or the like. For example, the period in which a detection period can be set corresponds to a period in which only light of the target component is emitted from the target light source unit and all of the light source units other than the target light source unit are extinguished. The light source units on the periphery of the target light source unit are light source units positioned at distances not exceeding a threshold from the target light source unit, for example. Alternatively, an adjacent light source unit to the target light source unit may be used alone as the light source unit on the periphery of the target light source unit.

The control unit 301 generates the light source control signal such that a period in which a detection period can be set is created, and outputs the light source control signal to the light source units. Generating the light source control signal may also be referred to as "executing the lighting instruction". Further, the control unit 301 has similar functions (setting a detection period; generating and outputting the sensor detection control signal) to the detection timing control unit 103 of the first embodiment. In this embodiment, the control unit 301 corrects the light source control signal and generates the sensor detection control signal on the basis of the light source control signal and the delay information. The control unit 301 then outputs the corrected light source control signal and the sensor detection control signal. The light source control signal and the sensor detection control signal may be generated by separate function units.

In this embodiment, the control unit 301 executes the processing described above on each of the three light source units 300A to 300C. As a result, three light source control signals corresponding respectively to the three light source units 300A to 300C are generated, and three sensor detection control signals (detection periods) corresponding respectively to the three light source units 300A to 300C are generated.

The brightness sensor 104 and the color variation determination unit 107 execute the processing described in the first embodiment on each of the three light source units 300A to 300C. For example, with respect to each of the three light source units 300A to 300C, the color variation determination unit 107 obtains, from the brightness sensor 104, a detection value corresponding to the brightness detected by the brightness sensor 104 during the detection period corresponding to the relevant light source unit as a sensor value corresponding to the relevant light source unit.

Note that the delay information, the reference sensor value, and the color relationship information may be, but do not have to be, constituted by information (a value) that is shared by the three light source units 300A to 300C. Further, the light-emitting apparatus may include a plurality of brightness sensors. Correspondence relationships between the light source units and the brightness sensors may be determined in advance, and the brightness of the light emitted from a light source unit may be detected by the brightness sensor corresponding to the relevant light source unit.

Emission Period and Detection Period Setting Method

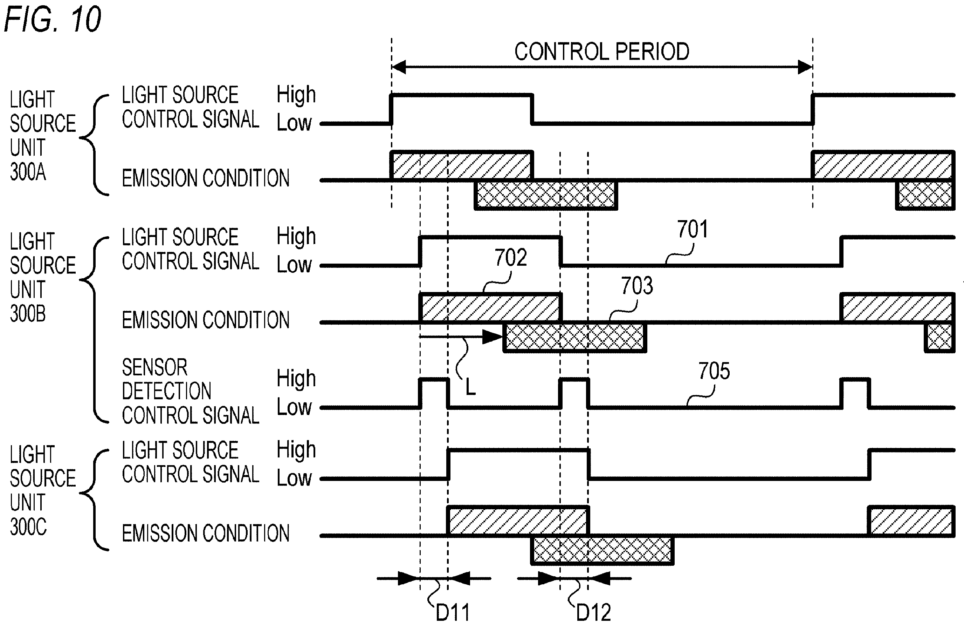

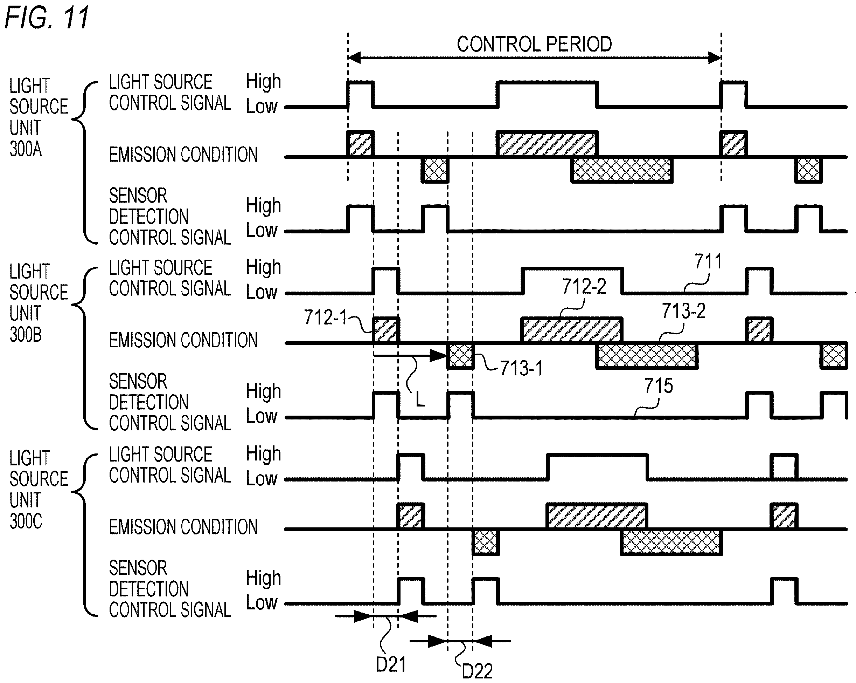

A specific example of a method for setting an emission period and a detection period will now be described using FIGS. 10 and 11. Here, an example in which each of the three light source units 300A to 300C emits cyan light and red light in each of a plurality of control periods will be described. In other words, a drive signal (the "High" light source control signal) is input into each light source unit periodically. Further, here, an example in which a cyan light detection period and a red light detection period are set will be described.

As described above, the control unit 301 obtains the delay information and the light source control signal, and then corrects the light source control signal and generates the sensor detection control signal on the basis of the delay information and the light source control signal. A reference numeral 701 in FIG. 10 denotes an uncorrected light source control signal corresponding to the light source unit 300B, and a reference numeral 711 in FIG. 11 denotes a corrected light source control signal corresponding to the light source unit 300B. A reference numeral 705 in FIG. 10 and a reference numeral 715 in FIG. 11 respectively denote a sensor detection control signal corresponding to the light source unit 300B.

In the example shown in FIG. 10, the light source unit 300B executes cyan light emission 702 and red light emission 703 once each in each of the plurality of control periods in accordance with the uncorrected light source control signal 701. The light source units 300A and 300C likewise emit cyan light and red light once each in each of the plurality of control periods.

In the example shown in FIG. 10, a detection period D11 in which the light source unit 300B executes only cyan light emission 702 and a detection period D12 in which the light source unit 300B executes only red light emission 703 are set in accordance with the sensor detection control signal 705. During the detection periods D11, D12, the light source units 300A, 300C emit light. Therefore, during the detection periods D11, D12, the brightness sensor 104 cannot detect the brightness of only the cyan light emitted from the light source unit 300B, the brightness of only the red light emitted from the light source unit 300B, and so on. A similar problem occurs in relation to the light source units 300A, 300C.

Hence, in this embodiment, as shown in FIG. 11, the corrected light source control signal 711 is generated and used in relation to the light source unit 300B. Further, the sensor detection control signal 715 is generated and used in relation to the light source unit 300B in accordance with the corrected light source control signal 711. Corrected light source control signals and sensor detection control signals are generated and used in relation to the light source units 300A, 300C in a similar manner to the light source unit 300B.

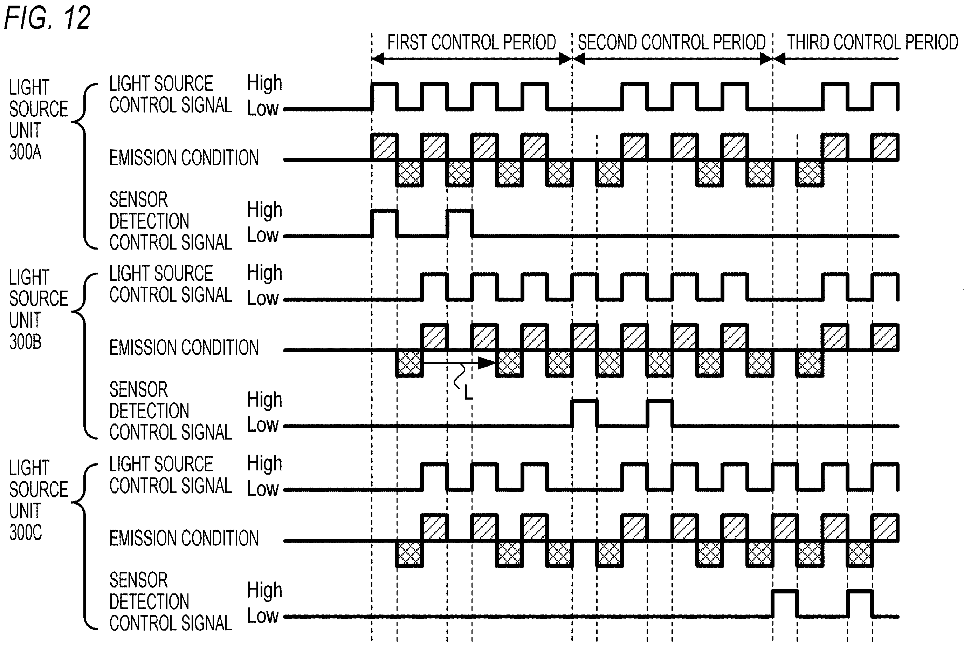

As shown in FIGS. 11 and 12, the drive signal (the "High" light source control signal) input into each light source unit is divided into a plurality parts as a result of the correction. In the example shown in FIG. 11, the light source unit 300B executes cyan light emission 712-1, 712-2 and red light emission 713-1, 713-2 twice each in each of the plurality of control periods in accordance with the corrected light source control signal 711. The light source units 300A, 300C likewise emit cyan light and red light twice each in each of the plurality of control periods.

In the example shown in FIG. 11, a detection period D21 in which the light source unit 300B executes only cyan light emission 712-1 and a detection period D22 in which the light source unit 300B executes only red light emission 713-1 are set in accordance with the sensor detection control signal 715. During the detection periods D21, D22, the light source units 300A, 300C are extinguished. Hence, during the detection period D21, the brightness sensor 104 can detect the brightness of solely the cyan light emitted from the light source unit 300B with a high degree of precision, and during the detection period D22, the brightness sensor 104 can detect the brightness of solely the red light emitted from the light source unit 300B with a high degree of precision. Similar effects are obtained in relation to the light source units 300A, 300C.

Modified Example 1

In the example shown in FIG. 11, a plurality of detection periods corresponding respectively to the plurality of light source units are set within a single input period. The input period is a period in which drive signals are input into the respective light sources, and corresponds to the control period. With a setting method such as that shown in FIG. 11, however, an upper limit time serving as a time corresponding to a single control period and serving as an upper limit of a total period of light emission from a single light source unit is reduced. For example, the upper limit time is reduced to s steadily shorter time as the number of light source units increases. When the upper limit time is reduced, an upper limit of the emission brightness of the light source unit is also reduced.

Therefore, as shown in FIG. 12, a plurality of detection periods corresponding respectively to the plurality of light source units may be set. In the example shown in FIG. 12, for each of the plurality of light source units, a detection period corresponding to the relevant light source unit is set within a control period that differs from the control periods in which the detection periods corresponding to the light source units on the periphery of the relevant light source unit are set. More specifically, a detection period corresponding to the light source unit 300A is set within a first control period, a detection period corresponding to the light source unit 300B is set within a second control period, and a detection period corresponding to the light source unit 300C is set within a third control period. As a result, a reduction in the upper limit time can be suppressed.

Effects

According to this embodiment, as described above, for each of the plurality of light source units, a period in which the light source units on the periphery of the relevant light source unit are extinguished is set as the detection period corresponding to the relevant light source unit. Then, for each of the plurality of light source units, a sensor value corresponding to the brightness detected by the brightness sensor during the detection period corresponding to the relevant light source unit is obtained from the brightness sensor as the sensor value corresponding to the relevant light source unit. In so doing, when a plurality of light source units are used, the sensor value of the light emitted from each light source unit can be obtained with a high degree of precision, and accordingly, high-precision processing based on the obtained sensor value can be executed. More specifically, a sensor value in which effects from the other light beams are reduced can be obtained as the sensor value of the light emitted from the light source unit.

Fourth Embodiment

A fourth embodiment of the present invention will be described below. In this embodiment, an example in which the light-emitting apparatus is a display apparatus will be described. The display apparatus according to this embodiment includes a display unit that displays images by transmitting light emitted from a light source unit on the basis of display image data. The display apparatus is a liquid crystal display apparatus, a micro electro mechanical system (MEMS) shutter type display apparatus, or the like, for example. More specifically, the display apparatus is an advertisement display apparatus, a sign display apparatus, a projection apparatus (a projector), a PC, a PDA, a tablet terminal, a mobile telephone terminal, a television apparatus, an imaging apparatus, a digital photo frame, a game apparatus, a household electric appliance, an in-vehicle apparatus, or the like. Note that points (configurations, processing, and so on) differing from the first embodiment will be described in detail below, while description of points that are identical to the first embodiment will be omitted.

Configuration of Display Apparatus

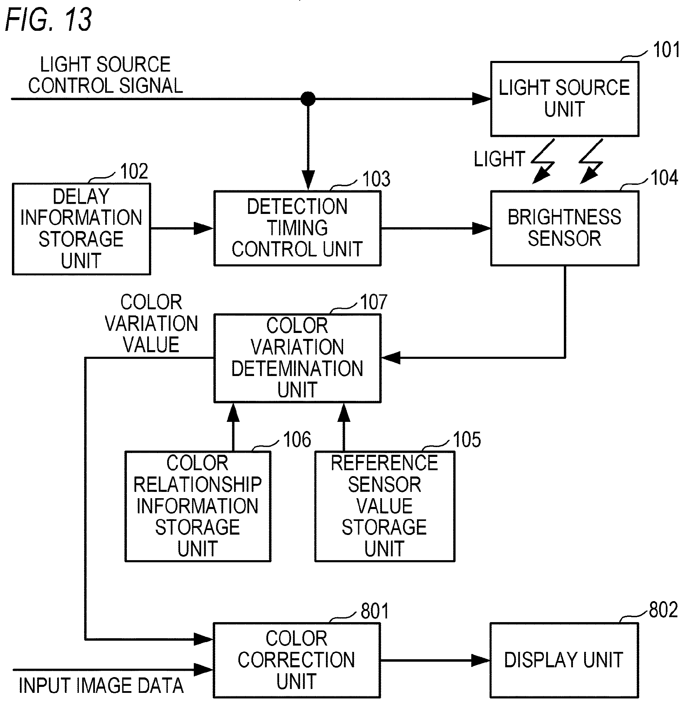

An example configuration of the display apparatus according to this embodiment will now be described. FIG. 13 shows an example configuration of the display apparatus according to this embodiment. The display apparatus according to this embodiment includes the plurality of function units provided in the light-emitting apparatus according to the first embodiment (FIG. 1), a color correction unit 801, and a display unit 802.

The color correction unit 801 generates display image data by correcting input image data on the basis of the sensor value obtained by the color variation determination unit 107 from the brightness sensor 104, taking into consideration the emission color of the light source unit 101. The input image data are image data input into the display apparatus, image data recorded in a storage unit, not shown in the figures, provided in the display apparatus, or the like. In this embodiment, the color correction unit 801 obtains the color variation value from the color variation determination unit 107, and generates the display image data by correcting the input image data on the basis of the color variation value. The color correction unit 801 then outputs the display image data to the display unit 802.

The display unit 802 displays an image on a screen by transmitting the light emitted from the light source unit 101 on the basis of the display image data. The display unit 802 is a liquid crystal panel, a MEMS shutter type display panel, or the like, for example.

Input Image Data Correction Method

A specific example of a method for correcting the input image data will now be described. There are no particular limitations on the format of the input image data, but here, an example of a case in which respective pixel values of the input image data correspond to RGB values (an R value, a G value, a B value) = (Ri, Gi, Bi) will be described.

Step 2-1

In step 2-1, the color correction unit 801 transforms the respective RGB values (Ri, Gi, Bi) into XYZ tristimulus values (Xpi, Ypi, Zpi). In this embodiment, the color correction unit 801 transforms the RGB values (Ri, Gi, Bi) of the input image data into XYZ tristimulus values (Xpi, Ypi, Zpi) using formula 6, shown below. Elements aX, aY, aZ, bX, bY, bZ, cX, cY, cZ on a transformation matrix of formula 6 are determined in advance on the basis of a measured value of the light emitted from the screen.

[Math. 1]

$$\begin{pmatrix} Xpi \\ Ypi \\ Zpi \end{pmatrix} = \begin{pmatrix} aX & aY & aZ \\ bX & bY & bZ \\ cX & cY & cZ \end{pmatrix} \begin{pmatrix} Ri \\ Gi \\ Bi \end{pmatrix} \cdots (\text{formula } 6)$$

Step 2-2

In step 2-2, the color correction unit 801 divides the XYZ tristimulus values (Xpi, Ypi, Zpi) obtained in step 2-1 respectively by the color variation values (DX, DY, DZ). In this embodiment, the XYZ tristimulus values after being divided by the color variation values (DX, DY, DZ) will be referred to as "XYZ tristimulus values (Xoi, Yoi, Zoi)". More specifically, as shown in formula 7, the color correction unit 801 calculates the X stimulus value Xoi by dividing the X stimulus value Xpi by the X variation value DX. As shown in formula 8, the color correction unit 801 calculates the Y stimulus value Yoi by dividing the Y stimulus value Ypi by the Y variation value DY. Further, as shown in formula 9, the color correction unit 801 calculates the Z stimulus value Zoi by dividing the Z stimulus value Zpi by the Z variation value DZ.

$$Xoi = Xpi/DX \ldots (\text{formula } 7)$$

$$Yoi = Ypi/DY \ldots (\text{formula } 8)$$

$$Zoi = Zpi/DZ \ldots (\text{formula } 9)$$

Step 2-3

In step 2-3, the color correction unit 801 transforms the XYZ tristimulus values (Xoi, Yoi, Zoi) calculated in step 2-2 respectively back into RGB values (Ro, Go, Bo) serving as the pixel values of the display image data. In this embodiment, the color correction unit 801 transforms the XYZ tristimulus values (Xoi, Yoi, Zoi) back into the RGB values (Ro, Go, Bo) using formula 10, shown below. The transformation matrix of formula 10 is an inverse matrix of the transformation matrix of formula 6.

[Math. 2]

$$\begin{pmatrix} Ro \\ Go \\ Bo \end{pmatrix} = \begin{pmatrix} aR & aG & aB \\ bR & bG & bB \\ cR & cG & cB \end{pmatrix} \begin{pmatrix} Xoi \\ Yoi \\ Zoi \end{pmatrix} \cdots (\text{formula } 10)$$

Effects

According to this embodiment, as described above, display image data are generated by correcting input image data on the basis of a sensor value obtained with a high degree of precision, whereupon an image based on the display image data is displayed. As a result, unintended variation in the display color (the color of the screen), the display brightness (the brightness of the screen), and so on can be suppressed.

Note that the respective function units of the first to fourth embodiments may be, but do not have to be, constituted by individual hardware. The functions of two or more function units may be realized using shared hardware. Each of the plurality of functions of a single function unit may be realized by individual hardware. Further, two or more functions of a single function unit may be realized by shared hardware. Furthermore, the respective function units may be, but do not have to be, realized by hardware. For example, the apparatus may include a processor and a memory storing a control program, and the functions of at least some of the function units of the apparatus may be realized by having the processor read the control program from the memory and execute the program.

Note that the first to fourth embodiments are merely examples, and configurations obtained by appropriately amending or modifying the configurations of the first to fourth embodiments within the scope of the spirit of the present invention are also included in the present invention. Configurations obtained by appropriately combining the configurations of the first to fourth embodiments are likewise included in the present invention.

<Other Embodiments>

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

A light-emitting apparatus includes: a light source configured to emit light of a first color in response to input of a drive signal, and emit light of a second color after a predetermined time elapses following emission of the light of the first color; a setting unit configured to set a first detection period for detecting a brightness of the light of the first color within a period during which the drive signal is input into the light source, and set a second detection period for detecting a brightness of the light of the second color within a period during which the drive signal is not input into the light source; and a detecting unit configured to obtain a detection value corresponding to the brightness of the light emitted from the light source during each of the set first and second detection periods.

**Claims**

1. A light-emitting apparatus comprising:

   a light source configured to emit light of a first color in response to input of a drive signal, and emit light of a second color that is different from the first color after a predetermined time elapses following emission of the light of the first color;
   a setting unit configured to set a first detection period for detecting a brightness of the light of the first color within a period during which the drive signal is input into the light source, and set a second detection period for detecting a brightness of the light of the second color within a period during which the drive signal is not input into the light source; and
   a detecting unit configured to obtain a detection value corresponding to the brightness of the light emitted from the light source during each of the set first and second detection periods.

2. The light-emitting apparatus according to claim 1, wherein the setting unit sets the second detection period within a period during which the drive signal is not input into the light source, this period being delayed by the predetermined time from the period in which the drive signal is input into the light source.

3. The light-emitting apparatus according to claim 1 or 2, wherein the setting unit sets the first detection period within a period during which the drive signal is input into the light source and the light of the first color is emitted but the light of the second color is not emitted, and

sets the second detection period within a period during which the drive signal is not input into the light source and the light of the second color is emitted but the light of the first color is not emitted.

4. The light-emitting apparatus according to any one of claims 1 to 3, further comprising an obtaining unit configured to obtain emission color information on the basis of the detection value obtained by the detecting unit, the emission color information relating to a color of output light obtained by time-integrating the light of the first color and the light of the second color emitted from the light source.

5. The light-emitting apparatus according to claim 4, wherein the emission color information is information indicating a difference between the color of the output light and a predetermined emission color.

6. The light-emitting apparatus according to claim 4 or 5, wherein the emission color information is at least one of information based on XYZ tristimulus values of the output light, information based on u' and v' chromaticity values of the output light, and information based on x and y chromaticity values of the output light.

7. The light-emitting apparatus according to any one of claims 1 to 6, wherein the light source is provided in a plurality, and the setting unit sets the first detection period and the second detection period of a target light source, among the plurality of light sources, within a period during which the light of the first color and the light of the second color are not emitted from a light source on the periphery of the target light source.

8. The light-emitting apparatus according to claim 7, wherein drive signals are input into the respective light sources periodically,
the setting unit sets the first detection period and the second detection period of the target light source and the first detection period and the second detection period of the peripheral light source respectively within input periods in which the drive signals are input into the respective light sources, and
the input period in which the first detection period and the second detection period of the target light source are set differs from the input period in which the first detection period and the second detection period of the peripheral light source are set.

9. The light-emitting apparatus according to claim 7 or 8, further comprising a dividing unit configured to divide each of the drive signal input into the target light source and the drive signal input into the peripheral light source into a plurality of parts so as to create a period in which only the light of the first color is emitted from the target light source and neither the light of the first color nor the light of the second color is emitted from the peripheral light source, and a period in which only the light of the second color is emitted from the target light source and neither the light of the first color nor the light of the second color is emitted from the peripheral light source.

10. The light-emitting apparatus according to any one of claims 1 to 9, wherein the light source includes an LED configured to emit the light of the first color in response to input of the drive signal, and a fluorescent material provided on the LED so as to emit the light of the second color in response to the light of the first color.

11. The light-emitting apparatus according to any one of claims 1 to 10, wherein the detecting unit is a brightness sensor configured to output a detection value corresponding to the brightness of light input therein.

12. The light-emitting apparatus according to any one of claims 1 to 11, wherein the light source is provided in a plurality, and
the detecting unit is a brightness sensor capable of detecting the brightness of each of the plurality of light sources.

13. An information-processing apparatus configured to obtain information relating to a light-emitting apparatus having a light source configured to emit light of a first color in response to input of a drive signal and emit light of a second color that is different from the first color after a predetermined time elapses following emission of the light of the first color, and a brightness sensor configured to measure a brightness of the light emitted from the light source, the information-processing apparatus comprising:

a setting unit configured to set a first detection period for detecting a brightness of the light of the first color within a period during which the drive signal is input into the light source, and set a second detection period for detecting a brightness of the light of the second color within a period during which the drive signal is not input into the light source; and
a detecting unit configured to obtain a detection value corresponding to the brightness of the light emitted from the light source during each of the set first and second detection periods.

14. A display apparatus comprising:

a light source configured to emit light of a first color in response to input of a drive signal, and emit light of a second color that is different from the first color after a predetermined time elapses following emission of the light of the first color;

a display unit configured to display an image by transmitting the light emitted from the light source on the basis of display image data;

a setting unit configured to set a first detection period for detecting a brightness of the light of the first color within a period during which the drive signal is input into the light source, and set a second detection period for detecting a brightness of the light of the second color within a period during which the drive signal is not input into the light source; and

a detecting unit configured to obtain a detection value corresponding to the brightness of the light emitted from the light source during each of the set first and second detection periods.

15. The display apparatus according to claim 14, further comprising a correcting unit configured to generate the display image data by correcting input image data on the basis of the detection value obtained by the detecting unit, taking into consideration a color of output light obtained by time-integrating the light of the first color and the light of the second color emitted from the light source.

16. A control method for a light-emitting apparatus having a light source configured to emit light of a first color in response to input of a drive signal, and emit light of a second color that is different from the first color after a predetermined time elapses following emission of the light of the first color, and a brightness sensor configured to measure a brightness of the light emitted from the light source,
the control method comprising:

a setting step of setting a first detection period for detecting a brightness of the light of the first color within a period during which the drive signal is input into the light source, and setting a second detection period for detecting a brightness of the light of the second color within a period during which the drive signal is not input into the light source; and

a detecting step of obtaining a detection value corresponding to the brightness of the light emitted from the light source during each of the set first and second detection periods.

17. The control method according to claim 16, wherein in the setting step, the second detection period is set within a period during which the drive signal is not input into the light source, this period being delayed by the predetermined time from the period in which the drive signal is input into the light source.

18. The control method according to claim 16 or 17, wherein in the setting step, the first detection period is set within a period during which the drive signal is input into the light source and the light of the first color is emitted but the light of the second color is not emitted, and
the second detection period is set within a period during which the drive signal is not input into the light source and the light of the second color is emitted but the light of the first color is not emitted.

19. The control method according to any one of claims 16 to 18, further comprising an obtaining step of obtaining emission color information on the basis of the detection value obtained in the detecting step, the emission color information relating to a color of output light obtained by time-integrating the light of the first color and the light of the second color emitted from the light source.

20. The control method according to claim 19, wherein the emission color information is information indicating a difference between the color of the output light and a predetermined emission color.

21. The control method according to claim 19 or 20, wherein the emission color information is at least one of information based on XYZ tristimulus values of the output light, information based on u' and v' chromaticity values of the output light, and information based on x and y chromaticity values of the output light.

22. The control method according to any one of claims 16 to 21, wherein the light source is provided in a plurality, and in the setting step, the first detection period and the second detection period of a target light source, among the plurality of light sources, are set within a period during which the light of the first color and the light of the second color are not emitted from a light source on the periphery of the target light source.

23. The control method according to claim 22, wherein drive signals are input into the respective light sources periodically, in the setting step, the first detection period and the second detection period of the target light source and the first detection period and the second detection period of the peripheral light source are set respectively within input periods in which the drive signals are input into the respective light sources, and
the input period in which the first detection period and the second detection period of the target light source are set differs from the input period in which the first detection period and the second detection period of the peripheral light source are set.

24. The control method according to claim 22 or 23, further comprising a dividing step of dividing each of the drive signal input into the target light source and the drive signal input into the peripheral light source into a plurality of parts so as to create a period in which only the light of the first color is emitted from the target light source and neither the light of the first color nor the light of the second color is emitted from the peripheral light source, and a period in which only the light of the second color is emitted from the target light source and neither the light of the first color nor the light of the second color is emitted from the peripheral light source.

25. The control method according to any one of claims 16 to 24, wherein the light source includes an LED configured to emit the light of the first color in response to input of the drive signal, and a fluorescent material provided on the LED so as to emit the light of the second color in response to the light of the first color.

26. The control method according to any one of claims 16 to 25, wherein the brightness sensor outputs a detection value corresponding to the brightness of light input therein.

27. The control method according to any one of claims 16 to 26, wherein the light source is provided in a plurality, and the brightness sensor is a brightness sensor capable of detecting the brightness of each of the plurality of light sources.

28. A control method for a display apparatus having a light source configured to emit light of a first color in response to input of a drive signal and emit light of a second color that is different from the first color after a predetermined time elapses following emission of the light of the first color, a display unit configured to display an image by transmitting the light emitted from the light source on the basis of display image data, and a brightness sensor configured to measure a brightness of the light emitted from the light source,
the control method comprising:

a setting step of setting a first detection period for detecting a brightness of the light of the first color within a period during which the drive signal is input into the light source, and setting a second detection period for detecting a brightness of the light of the second color within a period during which the drive signal is not input into the light source; and
a detecting step of obtaining a detection value corresponding to the brightness of the light emitted from the light source during each of the set first and second detection periods.

29. The control method according to claim 28, further comprising a correcting step of generating the display image data by correcting input image data on the basis of the detection value obtained in the detecting step, taking into consideration a color of output light obtained by time-integrating the light of the first color and the light of the second color emitted from the light source.

30. A non-transitory computer readable medium that stores a program, wherein the program causes a computer to execute the control method according to any one of claims 16 to 29.

## FIG. 1

LIGHT SOURCE
CONTROL SIGNAL

LIGHT SOURCE
UNIT — 101

LIGHT

DELAY
INFORMATION
STORAGE
UNIT — 102

DETECTION
TIMING
CONTROL UNIT — 103

BRIGHTNESS
SENSOR — 104

COLOR
VARIATION
VALUE

COLOR
VARIATION
DETEMINATION
UNIT — 107

COLOR
RELATIONSHIP
INFORMATION
STORAGE
UNIT — 106

REFERENCE
SENSOR
VALUE
STORAGE
UNIT — 105

## FIG. 2

201

ENTIRE LIGHT-EMITTING SURFACE

## FIG. 3

EP 3 425 622 A2

## FIG. 4

| CORRESPONDENCE RELATION SHIP 1 | | CORRESPONDENCE RELATION SHIP 2 | | CORRESPONDENCE RELATION SHIP 3 | |
|---|---|---|---|---|---|
| INPUT VALUE YR | OUTPUT VALUE KX | INPUT VALUE YR+YC | OUTPUT VALUE KY | INPUT VALUE YC | OUTPUT VALUE KZ |
| 0 | 0.81 | 0 | 0.92 | 0 | 0.75 |
| 1 | 0.85 | 1 | 0.921 | 1 | 0.77 |
| ... | ... | ... | ... | ... | ... |
| 255 | 1.21 | 255 | 1.12 | 255 | 1.31 |

EP 3 425 622 A2

*FIG. 5*

LIGHT SOURCE CONTROL SIGNAL — High / Low — 401

EMISSION CONDITION — 402 / 403

SENSOR DETECTION CONTROL SIGNAL — High / Low — 405

CONTROL PERIOD

D1 — L — t1 — t2

EP 3 425 622 A2

*FIG. 6*

EP 3 425 622 A2

FIG. 7

## FIG. 8

LIGHT SOURCE
CONTROL SIGNAL →

300A 300B 300C

LIGHT SOURCE
UNIT

CONTROL
UNIT
/ 301

102

DELAY
INFORMATION
STORAGE
UNIT →

LIGHT →

104

BRIGHTNESS
SENSOR

COLOR
VARIATION
VALUE ←

107

COLOR
VARIATION
DETEMINATION
UNIT ←

106

COLOR
RELATIONSHIP
INFORMATION
STORAGE
UNIT

105

REFERENCE
SENSOR
VALUE
STORAGE
UNIT

## FIG. 9

ENTIRE LIGHT-EMITTING SURFACE

601

602

603

FIG. 10

FIG. 11

# FIG. 12

# FIG. 13

LIGHT SOURCE
CONTROL SIGNAL

LIGHT SOURCE
UNIT  101

LIGHT

DELAY
INFORMATION
STORAGE
UNIT  102

DETECTION
TIMING
CONTROL UNIT  103

BRIGHTNESS
SENSOR  104

COLOR
VARIATION
VALUE

COLOR
VARIATION
DETEMINATION
UNIT  107

COLOR
RELATIONSHIP
INFORMATION
STORAGE
UNIT  106

REFERENCE
SENSOR
VALUE
STORAGE
UNIT  105

COLOR
CORRECTION
UNIT  801

DISPLAY UNIT  802

INPUT IMAGE DATA

**EP 3 425 622 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013073803 A